(19) **Europäisches Patentamt**
**European Patent Office**
**Office européen des brevets**

(11) **EP 0 838 161 A2**

(12) **EUROPEAN PATENT APPLICATION**

(43) Date of publication:
**29.04.1998 Bulletin 1998/18**

(51) Int Cl.$^6$: **A23L 1/275**

(21) Application number: **97307979.1**

(22) Date of filing: **09.10.1997**

(84) Designated Contracting States:
**AT BE CH DE DK ES FI FR GB GR IE IT LI LU MC NL PT SE**
Designated Extension States:
**AL LT LV RO SI**

(30) Priority: **25.10.1996 US 736739**

(71) Applicant: **KRAFT FOODS, INC.**
**Northfield, Illinois 60093 (US)**

(72) Inventors:
• **Blanchard, Lou Anne**
  **Hopewell Junction, New York 12533 (US)**
• **Saleeb, Fouad Zaki**
  **Pleasantville, New York 10570 (US)**

(74) Representative: **W.P. THOMPSON & CO.**
**Celcon House**
**289-293 High Holborn**
**London WC1V 7HU (GB)**

(54) **Flavor-stabilized beet colorant composition**

(57) A red color extract from beets is stabilized against off-flavor by co-drying with a mixture of polyvalent metallic compounds, such as magnesium oxide and calcium chloride.

Desirably, the co-dried composition also contains a polycarboxylic acid, or salt thereof, such as citric acid.

**Description**

BACKGROUND OF THE INVENTION

1. Field of the Invention

This invention relates to food colorants, and more particularly, it relates to a red colorant obtained from beets as a stabilized beet colorant composition.

2. Description of the Prior Art

As consumers increase their demand for non-synthetic food additives, the processed food industry requires colorants that are derived from other foodstuffs. Colorants are used to add a distinctive or emulative color to both food and drink products. However, some consumers now regard synthetic colorants as less acceptable than colorants derived from carrots, tomatoes, sweet potatoes, beets and the like. Thus, there is a need for such colorants.

However, like many complex mixtures of organic compounds, food derived colorants are frequently not stable. Rather, food derived colorants tend to produce off-colors and off-flavor notes over time. As a result, the industry has a longstanding need for a coloring composition that maintains its color and neutral flavor for an extended period. Desirably such a food colorant is acceptable for use in both food and drink products.

Typically, food based food additives such as food colorants are stabilized by combining the food derived materials with one or more other compounds to provide a product that is stable in terms of color and off-flavor development.

Among the food colorants that are approved by the United States Food and Drug Administration as permanently listed and exempt from certification is a red colorant obtained from dehydrated beets (beet powder).

U.S. Pat. No. 3,336,141 of Frisina discloses a coloring emulsion prepared from naturally-occurring organic materials such as paprika, annatto, beets, carrots, sweet potatoes, tomatoes, saffron and blueberries. The emulsion is prepared by (a) combining a solution of an edible organic solvent and an oleoresin of a naturally-occurring organic material which contains coloring matter with a solution of water and a chelating agent; (b) adding to this mixture finely ground particles of the naturally-occurring organic material; and (c) shearing the resultant mixture to reduce the finely ground material and the oleoresin to colloidal size so as to produce an emulsion.

U.S. Pat. No. 2,567,362 of Berkman et al. and U.S. Pat. No. 2,799,588 of Todd teach processes for extracting pigments from vegetables. Beets are not specifically disclosed as a useful starting material for either process, however.

U.S. Pat No. 3,447,933 of Smith et al. relates to a spray-drying process for preparing a food colorant in the form of dry, free-flowing particles from an aqueous slurry of the colorant.

U.S. Pat. No. 4,027,042 of Von Elbe et al. relates to recovering the pigment from beets in concentrated form. The beets are pulped to produce an insoluble phase (the pulp) and a soluble phase containing the beet pigments, protein and carbohydrates (principally sucrose). The soluble phase is subjected to fermentation wherein the carbohydrates, nitrates, nitrites and some of the proteins are utilized as the food source. This effects a concentration of the beet pigment without destroying the pigment or causing any undesirable effect on the pigment from the standpoint of physical characteristics and color.

U.S. Pat. No. 4,132,793 of Haber et al. relates to stabilizing the color of red beet dye to heat and light by admixing with the beet dye ascorbic or erythorbic acid or a sodium salt thereof plus a sodium phosphate and, optionally, ethylene diamine tetra acetic acid or a sodium and/or a calcium salt thereof. This patent also discloses that certain cations and anions should not be combined with liquid beet concentrate. Cationic salts, which are said to show the most degradation in terms of color stability, are divalent and polyvalent salts of $Fe^{++}$, $Ca^{++}$, $Al^{+++}$, $Mg^{++}$ and $Cu^{++}$. Among the anions, sulfates are said to have no effect whereas sulfites and carbonates are said to have a negative effect. Similar effects were observed with known preservatives containing these anions while propionic acid was disclosed as producing some negative effects. Further, the Haber et al. patent does not disclose that beet colorant may develop an off-flavor. Consequently, this patent does not suggest the use of polyvalent cations at concentrations used herein for any purpose, much less that the off-flavor can be stabilized or that the additives disclosed therein or other compounds might be effective in stabilizing the flavor, as opposed to the color, of beet colorant.

U.S. Pat. No. 4,339,451 to Albaum et al. reports a beet pigment stabilized by co-drying with a polyvalent metal salt. The preferred polyvalent metal salt of the Albaum et al. patent, $CaCl_2$, makes the composition highly hygroscopic. To counteract this hygroscopicity, those of ordinary skill typically add a low DE maltodextrin to the composition. However, due to the presence of the maltodextrins, the resulting composition is not readily soluble in cold water.

With time, beets, beet pigment and beet pigment extract develop undesirable flavors and odors as well as discoloration. This limits the use of beet color and causes serious problems when the beet colorant or food products containing it must be stored for prolonged periods.

U.S. Pat. No. 4,363,810, also to Albaum et al., states that an alkali metal salt such as sodium chloride can also substantially prevent the development of off-flavors in a beet colorant.

It is an object of this invention to provide a red food colorant which remains stable as to flavor for prolonged periods of time and is readily soluble in cold water.

It is another object of this invention to provide a flavor-stable beet pigment composition useful as a food colorant.

It is still another object of this invention to provide a dry food colorant derived from beets which maintains its flavor when stored per se, or when admixed with other food ingredients.

It is also an object of this invention to provide a food colorant that is readily soluble in cold water. It is a further object of this invention to provide a food colorant that retains its color over time. It is still a further object of this invention to provide a food colorant that does not develop off-flavor notes that detract from a food or drink product that includes the food colorant of the present invention.

<u>SUMMARY OF THE INVENTION</u>

In accordance with the present invention, a mixture of metallic compounds stabilizes the flavor of beet pigment in food compositions. Desirably, the stabilized beet pigment composition also includes an organic acid. More particularly, this invention is directed to a co-dried food coloring composition comprising (a) a beet extract, (b) a flavor-stabilizing amount of a mixture of food-acceptable metallic compounds, and (c) an organic acid.

This invention is also directed to a method of preparing a flavor-stabilized beet pigment composition in dry form which includes admixing an aqueous solution comprising beet pigment with a flavor-stabilizing amount of a mixture of food-acceptable metallic compounds; and then removing water from the admixture to produce a dry powder of a flavor-stabilized beet pigment composition.

This invention is further directed to the flavor-stabilized beet pigment composition prepared by the above-described method.

In one embodiment, this invention is directed to a food composition containing the above-described co-dried food color composition.

In further embodiments, the invention is directed to employing a mixture of one or more inorganic salts, metallic inorganic compounds, and organic salts as the mixture of food acceptable metallic compounds in the above-described co-dried food color compositions, and method of preparation.

<u>DESCRIPTION OF THE PREFERRED EMBODIMENTS</u>

The present invention relates to a flavor-stabilized food colorant derived from beets, i.e. a food colorant that does not develop an off-flavor note that renders a product incorporating the colorant objectionable. This colorant, which is also described herein as a pigment, is provided in a dry and flavor-stabilized form by incorporating a source of food-acceptable metallic compounds with a liquid beet extract composition prior to drying the liquid so as to produce the beet colorant in dry particulate form.

Betanin is believed to be essentially responsible for providing color in a beet colorant. Betanin yields a characteristic magenta color.

Additionally, the colorant of the present invention possesses a higher beet solids content than that found in beet colorants heretofore available. For example, conventional beet colorants typically incorporate less than 55% beet solids. The colorant in accordance with the present invention typically possesses between about 60 and 88% beet solids, and preferably between about 70 and 85% beet solids, and more preferably between about 75 and 82% beet solids.

Available beet colorant and beet color extract have certain inherent disadvantages when utilized in dry particulate form. When some dry powders are stored or added to dry food preparations or dry beverage mixes, the red color, over time, discolors and fades to an undesirable color when combined with water. Furthermore, some dry red beet colorants develop an off-flavor when stored in a dry form. Finally it has been found that the dry red beet colorants that are color and off-flavor stable do not readily dissolve in cold water making their use undesirable in food preparations.

Upon storage, many beet extracts gradually develop off-flavor notes which has been attributed to an increase in the concentration of volatile sulfur compounds such as dimethyl sulfide (DMS) in the beet colorant. One of the natural components of the beet colorant composition, S-methyl methionine, is a precursor of DMS. When S-methyl methionine decomposes either slowly at room temperature, or more rapidly upon heating, it produces DMS. Preventing the decomposition of S-methyl methionine was, therefore, considered as a means of stabilizing the flavor of the red colorant composition obtained from beets.

While the use of $CaCl_2$ has been effective to stabilize a dry red beet colorant from off-flavor development, the $CaCl_2$ stabilized beet colorant of the prior art is highly hygroscopic. The approach taken heretofore in the art to reduce the hygroscopicity of such a composition is to add a low dextrose equivalent ("DE") maltodextrin to the composition. However, the use of such maltodextrins inhibits the dissolution of the composition in cold water.

It has been discovered that a mixture of food-acceptable metallic compounds, desirably including calcium, but at a level substantially lower than the calcium previously used to in beet colorants, will stabilize a beet colorant composition so as to substantially reduce the tendency of the composition to develop an off-flavor and yet permit the composition to be dried. The mechanism by which the metallic compounds accomplish this stabilization is not now presently understood but it is thought that some metallic species such as calcium contribute significantly to the mechanism of stabilizing the S-methyl methionine. In some instances, the stabilizing off-flavor development is accompanied by a stabilization of the red color.

In practicing the present invention, wide latitude can be observed in selecting the metallic compounds. However, certain guidelines and specific examples will facilitate the selection by those skilled in the art. Initially, but of critical and yet obvious importance, the source of the metallic compounds must be one that is "food-acceptable". Such sources must be inherently safe for human consumption. Desirably, at least one metal species in the metallic compounds is a polyvalent metal. Metal inorganic salts and covalent compounds are preferred although some metal organic salts can be operatively substituted. Generally, inorganic materials are easier to handle, lower in cost and more effective at a given concentration than organic materials.

The nature of the cations is important. Useful metals include such food-acceptable metals as calcium, magnesium, sodium, potassium, aluminum and iron. Preferably, the metals include calcium with at least one of magnesium, potassium, sodium and combinations thereof, with the combination of magnesium and calcium being most preferred. The metals may be provided from a single source or from multiple sources. While potassium and sodium can be operatively substituted for some, or all, of the magnesium used in the present invention, it is also believed that such substitution would require higher levels of potassium or sodium than the levels of magnesium discussed herein.

The moiety(ies) bound to the metal (hereinafter "anions") may be inorganic or organic anions, provided the anions, together with the metal, form a food-acceptable material. Further, the anion must be inert since its role in stabilizing the flavor of the beet colorant is not entirely clear. As used herein, the anion is inert in the sense that it does not prevent the stabilizing of the beet colorant flavor resulting from the use of the polyvalent metallic compounds. However, in some instances, the inert anion may not be totally without effect but may enhance or detract to an insignificant degree from the flavor stabilization of the polyvalent metallic compounds. Useful anions may include chloride, fluoride, hydroxide, oxide, carbonate, sulfate, phosphate, citrate, lactate, fumarate, maleate, iso-citrate, malonate, succinate, adipate, and glutarate. Desirably, the anion is a hydroxide, chloride, oxide, carbonate, lactate or a combination thereof.

It is believed that the anion desirably functions to initially solublize the calcium so that the calcium is available to participate in stabilizing the S-methyl methionine.

Therefore, inorganic compounds such as magnesium oxide, magnesium carbonate, calcium chloride, calcium hydroxide, calcium oxide, tricalcium phosphate, and ferric chloride are useful, and magnesium oxide, magnesium carbonate, calcium chloride, calcium hydroxide, calcium oxide, calcium lactate and mixtures thereof are preferred. Further, mixtures of salts are either all inorganic or a mixture of organic and inorganic. Those skilled in the art can select other useful sources of metallic compounds from the above guidelines and directives. Several screening tests may be utilized to select the most appropriate one for a given situation.

It has also been observed that the addition of a food-acceptable organic acid such as citric acid, lactic acid, fumaric acid, malic acid, iso-citric acid, malonic acid, succinic acid, adipic acid, acetic acid and glutaric acid, or a food-acceptable salt thereof, further improves the stability and cold water solubility of the food colorant. Desirably, the food colorant includes between about 0.5 and 5 parts (by weight) of an organic acid, or salt thereof, for each part of metallic compound present. More desirably, the food colorant of the present invention contains between about 0.8 and 3.5 parts of an organic acid, or salt thereof, for each part of metallic compound present. Nonetheless, the organic acid (or salt thereof) concentration is adjusted to ensure that the pH of the material to be co-dried is between about 4 and 5, and more desirably between about 4.2 and 4.5.

A further benefit of the present invention is that each of the organic components of the colorant can be obtained from other foodstuffs. For example, the organic acid may be citric acid derived from a citrus fruit or malic acid derived from apples.

Since the science of chemistry does not permit predictions with unerring accuracy, those skilled in the art will appreciate that not all combinations of metallic compounds and/or organic acid will be equally useful or produce the same results in the present invention. Thus, a compound of a particular metal, a particular "anion", and a particular organic acid may result in inferior results to those one might expect.

To obtain effective stabilization of the beet colorant, the metallic compounds, and if used, the organic acid or salt thereof, should be added to the liquid beet extract before the water is removed to provide the colorant in a dry, particulate form. It is believed that dry mixing the metallic compounds and organic acid, or salt thereof, with the dry beet pigment composition does not produce the desired stabilization.

Desirably the metallic compounds are added to the beet extract in an aqueous medium, hereinafter, a slurry. Typically such slurries contain between about 5 and 35 parts (on a weight basis) of metallic compound to 100 parts water. It is desired that the slurries contain between about 10 and 30 parts metallic compound to each 100 parts water and it is more desired that the slurries contain between about 15 and 25 parts metallic compound to each 100 parts water.

It is also desired that the temperature of the beet extract during the processing of the present invention is kept between about 70 and 100°F (about 21.1 and 37.8°C). Thus, while the beet extract may be frozen prior to processing, it is desirably first brought into the about 70 to 100°F (about 21.1 to 37.8°C) temperature range before being processed in accordance with the present invention. As some of the materials that are added to the beet extract may consume or release thermal energy when combined with the beet extract, it is also preferred that the addition of any material that affects the thermal energy of the beet extract is done in a manner that keeps the temperature of the beet extract within the about 70 and 100°F (about 21.1 and 37.8°C) range.

Additionally, it is desired that the beet extract is combined with an organic acid in a manner effective to control the size and quantity of crystals formed. For example, it is desired that once the beet extract and organic acid have been combined, the resulting admixture is used within about 10 hours of when the materials are combined. Moreover, typically, the beet extract and organic acid admixture are not used, i.e. co-dried, until at least about half an hour after they have been combined.

While some crystal formation and crystal aggregation may occur, it is desired that crystal aggregates are not allowed to form that are larger than about 50 microns and it is further desired that crystal aggregates are between about 20 and 50 microns.

It is further desired that the admixture, before co-drying, has a pH between about 4 and 5 and more desirably a pH between about 4.2 and 4.5. Typically, the pH is measured about 15 to 30 minutes after all of the ingredients have been combined. If the pH is too high, it is desired that the level of the organic acid is increased or the level of the metallic compound is decreased; and if the pH is too low, it is desired that the level of the metallic compound is increased.

It is also desired that the ratio of metallic compounds to organic acids is less than about 1 equivalent for each carboxylic group on the organic acid. For example, if the organic acid is citric acid, which has three carboxylic acid groups, then desirably there is one mole of citric acid for each mole of divalent or two moles of monovalent metallic ion. However, the amount of citric acid is increased or decreased to ensure that the resulting admixture has a pH within the desired range.

The quantity of the metallic compounds to be added should be an amount sufficient to stabilize the flavor of the beet colorant. A flavor stabilizing amount as used herein is an amount sufficient to prevent the production of noticeable amounts of dimethyl sulfide in the beet colorant composition described herein. Basing the metal compound addition on the amount of solids in the liquid beet extract concentrate as it is prepared for drying is an effective means of providing the desired amount. The effective amount of the metal compound may most conveniently be expressed as a weight percent of the metal (based on the combined weight of the metal compound, other additives and the beet solids). However, it is noted that the amount of metal necessary to stabilize the off-flavor production is affected by the anion. For example, calcium hydroxide is about twice as effective as calcium chloride. Thus, the minimum effective amount of calcium hydroxide is about 3 percent whereas the minimum effective amount of calcium chloride is about 5.5 percent. Desirably, the weight of calcium in the present invention is less than about 15 percent and more desirably less than about 10 percent.

As magnesium, potassium and/or sodium compounds (salts) aid in drying the product of the present invention, the admixture to be dried should have an amount of magnesium, potassium and/or sodium effective to aid the drying. Desirably, the present invention uses between about 1.5 and 10 percent magnesium, potassium and/or sodium and more desirably less than about 8 percent magnesium, potassium and/or sodium.

It is preferred that the metallic compounds, combined, constitute between about 4.5 and 17 percent of the finished dry composition, and it is more preferred that the metallic compounds, combined, constitute between about 5 and 15 percent of the finished dry composition. It is still further preferred that the metallic compounds, combined, constitute between about 5 and 13 percent of the finished dry composition.

In practicing this invention, the beet color is utilized in liquid form as a beet extract having a concentration of 2°-80° Brix. This may be provided by any of several means. For example, liquid beet extract concentrate may be obtained commercially. At least in the past, the Beatrice Foods Company sold a liquid beet extract under the trade name COLOR-TREME R-III. This product was a beet root extract which had a concentration of 68° Brix. Alternately, a liquid beet extract can be obtained by preparing it, for example, from whole beets by well known means. Briefly, in one such procedure, the beets are reduced to a pulp using conventional equipment such as a grinder, homogenizer, high speed disintegrator, or rotary knife cutter. The liquid produced thereby consists of about 10% solids. Some of the pulp can be removed by liquid-solid techniques such as filtration, centrifugation, or decantation. In addition, or alternatively, the liquid extract can be concentrated by removal of water, although care must be taken to protect the heat-sensitive materials in the extract. Concentration means, such as low temperature evaporation, vacuum distillation and the like, may be employed. The concentrate produced can have a concentration of 2°-80° Brix.

Desirably the beet extract has a high pigment level, e.g. about 0.8 percent betanin or more and is fresh. It is further desired that the beet extract is kept frozen from substantially as soon as the extract can be frozen until between about 24 and 72 hours before it is used. It is preferred that the beet extract is kept frozen until between about 24 and 48 hours before it is used.

The metallic compounds and organic acid, or salt thereof, if any, should be added to the beet colorant while each component is in liquid form. Such materials may be incorporated by adding them to the liquid beet extract. Agitation may be required to effect dilution or dispersion and may be required to supply a uniform liquid mixture to the drying processes.

The mixture of beet extract, metallic compounds and optionally organic acids may be dried by conventional means to provide the stabilized colorant in the form of a dry powder. The process of removing water from the mixture is referred to herein as "co-drying" and the product as being "co-dried".

Such well known procedures as spray drying, drum drying or freeze drying may be conventionally utilized to effect the water removal and produce the dry powder. The preferred means of co-drying is spray drying. Those skilled in the art who are familiar with these procedures will appreciate that because of the temperature-sensitive nature of the beet colorant, care should be utilized if spray drying is employed. It has been found that spray drying temperatures of about 160°-650°F (about 65.6°-343.3°C) inlet and 140°-220°F (60.0°-104.4°C) outlet have proven satisfactory with about 335°-395°F (about 168.3°-201.7°C) inlet and 155°-215°F (68.3°-101.7°C) outlet being most preferred.

Desirably, the drier feed has been about 40 and 65 percent solids and more desirably between about 45 and 55 percent solids.

If the admixture containing the beet extract develops a substantial foam, the foam is either suppressed or removed in a conventional manner. For example, a food acceptable anti-foamant can be added.

In practicing this invention to provide a stabilized red colorant, the liquid beet extract may be employed as prepared or as obtained without further processing except, perhaps, for solids separation and concentration. A fermentation process, such as that disclosed in U.S. Pat. No. 4,027,042, may be employed, if desired, to remove carbohydrates, nitrates, nitrites and protein from the liquid beet extract and may be practiced in conjunction with the present invention. Such use is optional since the present invention will stabilize the beet colorant whether or not the liquid extract has been subjected to fermentation. Where a fermentation step is employed, the metallic compounds would preferably be added to the liquid extract subsequent to the fermentation operation and prior to the water removal step.

As noted above, it is important that the colorant of the present invention does not develop a quantity of DMS that would render any food product including such a colorant objectionable. It is believed that if a heated aqueous colorant admixture produces a headspace level of DMS that is equal to, or less than, 10 ppm, the colorant will not develop an undesirable off-flavor note on prolonged storage. It is preferred that the colorant, when combined with water and heated, produces a headspace level of DMS that is equal to, or less than, 5 ppm.

One way of ascertaining whether the colorant, when combined with water and heated, has an acceptable level of DMS is to measure the DMS in the headspace of a heated reconstituted sample. For example, about 0.3 gm of the colorant is placed in a 20 ml headspace vial. About 1.5 ml of distilled, deionized water is added to the vial which is then sealed. The vial with the water and colorant is shaken to ensure that the colorant is dissolved. The vial and its contents are then heated for about 45 minutes at about 53°C. Thereafter, a 1 ml headspace sample is withdrawn from the vial and injected into a conventional gas chromatograph effective to identifiably separate the DMS from the other compounds in the headspace and quantitatively measure the DMS concentration.

The stabilized beet colorant of this invention may be employed in a variety of uses. It can be used as such, that is it can be provided as a dry powder colorant for home or commercial use as a food-acceptable colorant. It can also be incorporated into dry beverage mixes where red is the desired color of the liquid beverage to be prepared therefrom. This stabilized red colorant also may find use in prepared foods where color is often a factor in providing a consumer-acceptable product.

A typical example of a formulation for a powdered soft drink mix employing the beet colorant of the invention is:

| Ingredient | Percent of Soft Drink Powder |
| --- | --- |
| Sugar | 90 - 95 |
| Food Acid | 1 - 7 |
| Buffer | 1 - 3 |
| Beet Colorant | 0.1 - 5 |
| Flavor | 0.01 - 5 |

The terms "beet colorant", "beet pigment", and "beet colorant composition" have been used interchangeably throughout this specification to indicate the same material, namely the red color material obtained from beets.

Unless specifically expressed to the contrary, all percentages and parts herein are by weight.

The following examples will serve to illustrate the subject invention.

COMPARATIVE EXAMPLE I

A red beet colorant was prepared by blending together (i) a liquid beet extract concentrate, (ii) magnesium oxide and (iii) anhydrous citric acid. The amounts of these ingredients were such that the final solution had a 83:17 ratio of beet solids to magnesium oxide plus citric acid. The fresh beet extract solution (68° Brix) had a 68% solids concentration. Specifically, the following were combined in the stated amounts:

| Ingredient | Amount (in grams) | % Solids | g of Solids | % of total Solids |
|---|---|---|---|---|
| Beet extract | 473 | 68 | 322 | 83 |
| Citric acid | 50.0 | 100 | 50 | 13 |
| MgO | 17.0 | 100 | 17 | 4 |
| Water | 175 | 0 | | − |
| Total | $\overline{715}$ | | $\overline{389}$ | |

The beet extract blend was spray dried at a 160°C inlet and 100°C outlet temperature. The spray drying tower feed was 54 percent solids and the pH of the extract blend was 4.39. The dried powder from each run was stored in fiber board drums with two plastic bags as a liner.

As the DMS content (reported in parts per million --ppm--, calculated on total solids basis) of this comparative example was 31.3 ppm, it was concluded that the product of this comparative example was not flavor stable.

U.S. Patent No. 4,339,451 notes that a 40% solution of beet solids (100% beet) spray dried at 210°F (98.9°C) inlet and 150°F (65.6°C) outlet, resulted in unacceptable levels of DMS.

COMPARATIVE EXAMPLE II

A red beet colorant was prepared by blending together (i) a liquid beet extract concentrate, (ii) calcium chloride and (iii) Star-Dri 1 (a DE of 1 maltodextrin sold by the A.E. Staley Manufacturing Co. of Decatur IL, 62521). The amounts of these ingredients were such that the final solution had a 52:48 ratio of beet solids to calcium plus Star-Dri 1. The fresh beet extract solution (68° Brix) had a 68% solids concentration. Specifically, the following were combined in the stated amounts:

| Ingredient | Amount (in grams) | % Solids | g of Solids | % of total Solids |
|---|---|---|---|---|
| Beet extract | 473 | 68 | 322 | 52 |
| CaC1$_2$ | 52 | 100 | 52 | 8 |
| Star-Dri 1 | 245 | 100 | 245 | 40 |
| Water | 450 | 0 | | − |
| Total | $\overline{1220}$ | | $\overline{619}$ | |

The beet extract blend was spray dried at a 160°C inlet and 100°C outlet temperature. The spray drying tower feed was 51 percent solids. The dried powder from each run was stored in paper-polyethylene-aluminum-polyethylene sealed pouches.

While the DMS contact of this comparison example was 10.3 ppm and thus flavor stable, after about 30 seconds (with mixing) to dissolve about 100 grams of this colorant mixed with 3.4 grams citric acid in about two quarts (about 1.89 1) of 50°F (10.0°C) water containing 175 grams of sugar, a "nickel" sized clump of material remained on the bottom of the container and some of the color particles floated on the surface of this admixture and remained for an extended period of time.

COMPARATIVE EXAMPLE III

A red beet colorant was not successfully prepared by blending together (i) a liquid beet extract concentrate, (ii) calcium hydroxide and (iii) anhydrous citric acid. The amounts of these ingredients were such that the final solution had a 78:22 ratio of beet solids to calcium hydroxide plus citric acid. The fresh beet extract solution (68° Brix) had a 68% solids concentration. Specifically, the following were combined in the stated amounts:

| Ingredient | Amount (in grams) | % Solids | g of Solids | % of total Solids |
|---|---|---|---|---|
| Beet extract | 625 | 68 | 425 | 78 |
| Ca(OH)$_2$ | 38.5 | 100 | 38.5 | 7 |
| Citric acid | 79.3 | 100 | 79.3 | 15 |
| Water | 450 | 0 | | |
| Total | 1093 | | 542.8 | – |

A beet extract slurry having 50 percent solids and a pH of 4.38 was fed to a spray drying tower. However, this material did not dry.

COMPARATIVE EXAMPLE IV

A red beet colorant was not successfully prepared by blending together (i) a liquid beet extract concentrate, (ii) calcium hydroxide and (iii) anhydrous citric acid. The amounts of these ingredients were such that the final solution had a 78:22 ratio of beet solids to calcium hydroxide plus citric acid. The fresh beet extract solution (67.5° Brix) had a 67.5% solids concentration. Specifically, the following were combined in the stated amounts:

| Ingredient | % of total Solids |
|---|---|
| Beet extract | 78 |
| Ca(OH)$_2$ | 5.5 |
| citric acid | 16.5 |
| water | |

A beet extract slurry having 45 percent solids and a pH of 4.21 was fed into a spray drying tower, but this material could not dry.

COMPARATIVE EXAMPLE IV

A production size run was made using the following approximate formulation:

| Ingredient | % of total Solids | Amount (in pounds [kg] dry basis) | |
|---|---|---|---|
| Beet extract | 78 | 405 | [183.70] |
| citric acid | 10 | 53 | [ 24.04] |
| CaC1$_2$ | 8 | 44 | [ 19.96] |
| MgO | 3 | 18 | [ 8.16] |
| water | | | |

* The calcium chloride was added as a 32% solution.

This formulation was fed into a spray tower at a solids concentration of about 45%. While product was initially formed, before half of the material was processed, the formulation developed crystals of a size that prevented further processing.

COMPARATIVE EXAMPLE VI

A production size run was made using the following approximate formulation:

| Ingredient | % of total Solids | Amount (in pounds [kg] dry basis) | |
|---|---|---|---|
| Beet extract | 73 | 405 | [183.70] |
| citric acid | 19 | 105.6 | [ 47.90] |
| Ca(OH)$_2$ | 5 | 25 | [ 11.34] |
| MgO | 3 | 18 | [ 8.16] |
| water | | | |

This formulation was fed into a spray tower at a solids concentration of between about 45 and 50%. While product was initially formed, before half of the material was processed, the formulation developed crystals of a size that prevented further processing.

EXAMPLE I

A red beet colorant was prepared by making a solution of beet juice as described below and spray drying the solution.

The beet juice solution contained:

| Ingredient | Amount (in grams) | % of total Solids |
|---|---|---|
| Beet Juice | 690 (67.5° Brix) | 77.1 |
| Citric acid | 67.2 | 11.1 |
| Magnesium oxide | 20.4 | 3.4 |
| Calcium chloride dihydrate | 51 | 8.4 |
| Water | 450 | |

The beet juice solution with a 44% solids solution was spray dried at 150°C inlet and 85°C outlet and a pH of 4.55. The DMS content was : 1.4 ppm.

EXAMPLE II

A stabilized red beet colorant was prepared by blending together (i) a liquid beet extract concentrate, (ii) magnesium oxide, (iii) calcium chloride dihydrate, and (iv) anhydrous citric acid. The amounts of these ingredients were such that the final solution had an 80:20 ratio of beet solids to magnesium oxide plus calcium chloride (anhydrous) and citric acid. The fresh beet extract solution (68° Brix) had an 68% solids concentration. Specifically, the following were combined in the stated amounts:

| Ingredient | Amount (in grams) | % Solids | g of Solids | % of total Solids |
|---|---|---|---|---|
| Beet extract | 690 | 68 | 469 | 79.6 |
| Citric acid | 61 | 100 | 61 | 10.4 |
| $CaCl_2$ | 51 | 76 | 39 | 6.6 |
| MgO | 20 | 100 | 20 | 3.4 |
| Water | 450 | 0 | | |
| Total | 1272 | | 589 | – |

The beet extract blend was spray dried at a 130°C inlet and 70°C outlet temperature. The spray drying tower feed was 46 percent solids and the pH of the extract blend was 4.61. The dried powder from each run was stored in paper-polyethylene-aluminum-polyethylene sealed pouches.

The DMS content was : 1.4 ppm.

EXAMPLE III

A stabilized red beet colorant was prepared by blending together (i) a liquid beet extract concentrate, (ii) magnesium oxide, (iii) calcium hydroxide and (iv) and anhydrous citric acid. The amounts of these ingredients were such that the final solution had a 73:27 ratio of beet solids to magnesium oxide plus calcium chloride and citric acid. The fresh beet extract solution (67.5° Brix) had a 67.5% solids concentration. Specifically, the following were combined in the stated amounts:

| Ingredient | Amount (in grams) | % Solids | g of Solids | % of total Solids |
|---|---|---|---|---|
| Beet extract | 625 | 68 | 422 | 72.9 |
| Citric acid | 110 | 100 | 110 | 19 |
| $Ca(OH)_2$ | 32 | 100 | 32 | 5.5 |
| MgO | 15 | 100 | 15 | 2.6 |

(continued)

| Ingredient | Amount (in grams) | % Solids | g of Solids | % of total Solids |
|---|---|---|---|---|
| Water | 450 | 0 | | – |
| Total | 1232 | | 626 | |

The beet extract blend was spray dried at a 140°C inlet and 80°C outlet temperature. The spray drying tower feed was 45 percent solids and the pH of the extract blen was between 4.4 and 4.7. The dried powder from each run was stored in paper-polyethylene-aluminum-polyethylene sealed pouches.

The DMS content was : 3.7 ppm.

**EXAMPLE IV**

About 0.8 grams of the beet colorant of Example II was added to about two quarts (about 1.89 1) of 50°F (10.0°C) water containing 175 grams of sugar and stirred. The colorant was substantially fully dissolved within about 30 seconds after the colorant was added to the water and there was no floating or undissolved material remaining.

EXAMPLE V

A production size run was made on a production spray tower. The following approximate formulation was used:

| Ingredient | % of total Solids | Amount (in pounds [kg]) | |
|---|---|---|---|
| Beet extract | 70.8 | 591 | [268.07] |
| citric acid | 10.6 | 52 | [ 23.59] |
| $CaCl_2$ | 6.6 | 33 | [ 14.97] |
| MgO | 3.2 | 16 | [ 7.26] |
| water | | 307 | [139.25] |

The about 33 pounds (14.97 kg) of calcium chloride were dispersed in about 90 pounds (40.82 kg) of water which was then combined with the about 52 pounds (23.59 kg) of citric acid and another about 157 pounds (71.21 kg) of water. When the calcum chloride and the citric acid were substantially dissolved and the temperature of the admixture was between about 80 and 100°F (about 26.7 and 37.8°C), about 591 pounds (268.07 kg) of a defrosted frozen high pigment (at least 0.8% betanin) beet extract with a 67.5% solids content at between about 80 and 100°F (about 26.7 and 37.8°C) was added. Separately, the about 16 pounds (7.26 kg) of magnesium oxide was dispersed in about 60 pounds (27.21 kg) of water. When the temperature of the magnesium oxide dispersion was between about 80 and 100°F (about 26.7 and 37.8°C) the magnesium oxide dispersion was combined with the admixture of calcium chloride, citric acid and beet extract. The combination was spray dried using conventional procedures between about 1 and 8 hours after the magnesium oxide dispersion was added to the admixture of calcium chloride, citric acid and beet extract.

The DMS content was : 1.6 ppm.

EXAMPLE VI

Two production size runs were made on a production spray tower with the following approximate formulation:

| Ingredient | % of total Solids | Amount (in pounds [kg] | |
|---|---|---|---|
| Beet extract | 73.2 | 542 | [245.85] |
| citric acid | 20.2 | 101 | [ 45.81] |
| $Ca(OH)_2$ | 3.8 | 19 | [ 8.62] |
| MgO | 2.8 | 14 | [ 6.35] |
| water | | 324 | [146.96] |

The about 19 pounds (8.62 kg) of calcium hydroxide were dispersed in about 100 pounds (45.36 kg) of water which was then combined with the about 101 pounds (45.81 kg) of citric acid and another about 164 pounds (74.39 kg) of water. When the calcium hydroxide and the citric acid were substantially dissolved and the temperature of the admixture was between about 80 and 100°F (about 26.7 and 37.8°C), about 542 pounds (245.85 kg) of a defrosted frozen high pigment (at least 0.8% betanin) beet extract with a 67.5% solids content at between about 80 and 100°F (about 26.7 and 37.8°C) was added. Separately, the about 14 pounds (6.35 kg) of magnesium oxide was dispersed in about 60 pounds (27.22 kg) of water. When the temperature of the magnesium oxide dispersion was between about 80 and 100°F (about 26.7 and 37.8°C) the magnesium oxide dispersion was combined with the admixture of calcium hydroxide, citric acid and beet extract. The combination was spray dried using conventional procedures between about 1 and 8 hours after the magnesium oxide dispersion was added to the admixture of calcium hydroxide, citric acid and beet extract.

The first run had a DMS content of 8.4 ppm while the second had a DMS content of 4.2 ppm.

In view of the above, it will be seen that the several objects of the invention are achieved and other advantageous results attained.

While the invention has been illustrated and described as embodied in an improved beet colorant, it is not intended to be limited to the details shown, since it will be understood that various omissions, modifications, substitutions and changes in the forms and details illustrated and in its operation can be made by those skilled in the art without departing in any way from the spirit of the present invention.

Without further analysis, the foregoing will so fully reveal the gist of the present invention that others can, by applying current knowledge, readily adapt it for various applications without omitting features that, from the standpoint of prior art, fairly constitute essential characteristics of the generic or specific aspects of this invention.

What is claimed as new and desired to be protected by Letters Patent is set forth in the appended claims.

**Claims**

1. A co-dried food color composition comprising:

   a) beet extract;
   b) a flavor-stabilizing and moisture-releasing amount of a mixture of food-acceptable metallic compounds, wherein the weight percent of the metallic compounds, based on the weight of the dry composition is from about 3% to 17%; and
   c) a flavor-stabilizing amount of a food-acceptable organic acid or salt thereof.

2. A food color composition according to claim 1, wherein the metals are calcium and at least one of magnesium, potassium, sodium, aluminum and iron.

3. A food color composition according to claim 1 or claim 2, wherein the metals are magnesium and calcium.

4. A food color composition according to claim 3, wherein the metallic compounds are at least one of magnesium oxide, magnesium hydroxide and magnesium carbonate, and at least one of calcium hydroxide, calcium oxide, calcium lactate and calcium chloride and the range of the magnesium is between about 1.5 to 10% and the range of the calcium is between about 3 to 15%.

5. A food color composition according to claim 3 or claim 4, in which the calcium concentration is between about 3 and 10 percent.

6. A food color composition according to any one of claims 3 to 5, wherein the anion associated with the calcium is effective to solublize said calcium.

7. A food color composition according to any one of claims 1 to 6, wherein the beet extract solids comprise between about 60 and 88% of said composition.

8. A food color composition according to any one of claims 1 to 7, wherein the organic acid, or salt thereof, is citric acid, or a salt thereof.

9. A food color composition according to any one of claims 1 to 8, characterized by the ability of about 0.8 grams of said food color composition to dissolve within about 30 seconds in about 1900 ml of about 10°C water with moderate stirring.

10. A dry beverage mix containing a co-dried food color composition according to any one of claims 1 to 9.

11. A powdered soft drink mix composition containing from 0.1% to 5% by weight of a co-dried color composition according to any one of claims 1 to 9.

12. A composition according to claim 11, wherein between about 60 and 88 percent of said color composition comprises beet extract solids.

13. A method of preparing a flavor-stabilized beet extract composition in dry form which comprises:

(a) admixing an aqueous solution comprising beet extract with

(i) an aqueous slurry of at least one of calcium hydroxide, calcium oxide, calcium lactate and calcium chloride wherein the amount of said calcium salt is effective to produce an admixture calcium salt concentration between about 3 and 15 percent; and
(ii) an aqueous slurry of at least one food acceptable second metallic compound, said second metallic compound comprising at least one of magnesium, potassium and sodium wherein the amount of said second metallic compound is effective to produce an admixture second metallic concentration between about 1.5 and 10 percent.

(b) removing water from the admixture of step (a) to produce a dry powder of a flavor-stabilized beet extract composition; and (c) adjusting the pH of the solution to between about 4 and 5.

14. A method according to claim 13, which further comprises admixing an organic acid, or a salt thereof, with said aqueous beet solution prior to said water removing step.

15. A method according to claim 13, which further comprises admixing citric acid, or a salt thereof, with said aqueous beet solution prior to said water removing step.

16. A method according to any one of claims 13 to 15, wherein between about 60 and 88 percent of said dry powder comprises beet extract solids.

17. A method according to any one of claims 13 to 16, wherein the water is removed in step (b) by spray drying.

18. A method according to any one of claims 13 to 16, wherein the water is removed in step (b) by freeze drying.

19. A method according to any one of claims 13 to 18, wherein said second metallic compound comprises a magnesium compound.

20. A method according to claim 19, wherein said magnesium compound comprises magnesium oxide.